# EUROPÄISCHE PATENTSCHRIFT

(11) **EP 3 387 700 B1**
(45) Veröffentlichungstag und Bekanntmachung des Hinweises auf die Patenterteilung: **03.02.2021**
(21) Anmeldenummer: 16809774.9
(22) Anmeldetag: 08.12.2016
(51) Int. Cl.: H01Q 1/04, B63B 21/66, B63G 8/38, G01V 1/20, H01R 13/629, H01Q 1/30

(54) **KUPPLUNGSVORRICHTUNG FÜR EINE LÖSBARE STECKERVERBINDUNG ZWISCHEN EINER SCHLEPPANTENNE UND EINEM WASSERFAHRZEUG**
COUPLING DEVICE FOR A RELEASABLE PLUG-IN CONNECTION BETWEEN A TRAILING AERIAL AND A WATERCRAFT
DISPOSITIF DE COUPLAGE POUR ÉTABLIR UNE CONNEXION LIBÉRABLE ENTRE UNE ANTENNE PENDANTE ET UN VÉHICULE AQUATIQUE

(30) Priorität: 09.12.2015 DE 102015224703
(43) Veröffentlichungstag der Anmeldung: 17.10.2018
(73) Patentinhaber: thyssenkrupp Marine Systems GmbH, 24143 Kiel (DE); thyssenkrupp AG, 45143 Essen (DE)
(72) Erfinder: STOLTENBERG, Burkhard, 24248 Mönkeberg (DE)
(74) Vertreter: thyssenkrupp Intellectual Property GmbH
(86) Internationale Anmeldenummer: PCT/EP2016/080258
(87) Internationale Veröffentlichungsnummer: WO 2017/097904

(56) Entgegenhaltungen:
- DE-A1-102005 045 843
- DE-C- 907 904
- FR-A- 1 335 016
- US-B1- 6 498 768

## Beschreibung

Die Erfindung betrifft eine Kupplungsvorrichtung für eine lösbare Steckerverbindung zwischen einer Schleppantenne und einem Wasserfahrzeug, mit einem ersten Steckerelement und einem zweiten Steckerelement zum Kuppeln von Schleppantenne und Wasserfahrzeug und eine Betätigungsvorrichtung, um das eine Steckerelement in Richtung des jeweils anderen Steckerelements zu beaufschlagen.

Es ist Stand der Technik Wasserfahrzeuge, insbesondere Unterseeboote, mit im Wasser geführten Schleppantennen auszustatten. Hierfür sind Systeme bekannt, um Schleppantennen an dem Fahrzeug zu befestigen, auszubringen und einzuholen. Diese Systeme beinhalten steck- und lösbare Unterwassersteckerverbindungen für eine signalführende Verbindung zwischen Fahrzeug und Schleppantenne. Für solch ein System werden beispielsweise sogenannte Clip-on-Verbinder verwendet, bei denen die Schleppantenne über ein Kabel mit dem zugehörigen Signalübertragungssystem des Fahrzeugs gekoppelt wird. Ein Clip-on-Verbinder befindet sich im Außenbereich des Fahrzeugs, beispielsweise in der Außenhülle eines Unterseebootes.

Eine Steckerverbindung besteht aus zwei Steckerelementen, die miteinander verbunden beziehungsweise gekuppelt werden. Ein Steckerelement kann auch als Steckerhälfte bezeichnet werden. Eine Verbindung der zwei Steckerelemente über Verschraubungen oder Bajonettverschlüsse ist für Schleppantennen nicht geeignet, da es Situationen geben kann, in denen die Steckerverbindung schnell gelöst werden muss. Dies ist mit Verschraubungen oder Bajonettverschlüssen nicht möglich.

Eine Grundvoraussetzung, die die Steckerverbindung erfüllen muss, besteht darin, dass sie derart stabil sein muss, dass sich die beiden Steckerelemente aufgrund von Fahrzeugbewegungen nicht gegeneinander bewegen, da es sonst zu Störungen in der Signalübertragung kommen kann. Die Signalübertragung kann beispielsweise über Lichtleiter erfolgen. Daher muss einer der beiden Steckerelemente zum Fahrzeug hin derart entkoppelt werden, dass aufgrund von Fahrzeugbewegungen wirkende Kräfte und Momente sich nicht auf die Steckerverbindung übertragen beziehungsweise sich auf diese negativ auswirken.

Eine Kupplungsvorrichtung für eine lösbare Steckerverbindung zwischen einer Schleppantenne und einem Unterseeboot zeigt die DE 10 2005 045 843 A1. Bei dieser Steckerverbindung wird als nachteilig erachtet, dass beide Steckerelemente möglichst genau axial fluchtend während des Vorgangs des Kuppelns aufeinanderzu geführt werden müssen, da es sonst zu Verspannungen oder Schwergängigkeit während des Kuppelns kommen kann. Eine jederzeit sichere Steckerverbindung ist somit nicht gewährleistet.

Ausgehend hiervon besteht die Aufgabe der vorliegenden Erfindung darin, eine Kupplungsvorrichtung für eine lösbare Steckerverbindung bereitzustellen, die ein möglichst störungsfreies Kuppeln und einen störungsfreien Betrieb ermöglicht.

Die Aufgabe wird gelöst durch eine Kupplungsvorrichtung gemäß Anspruch 1.

Hierbei kann vorgesehen sein, dass das erste Steckerelement fahrzeugseitig angeordnet ist und das zweite Steckerelement antennenseitig angeordnet ist. Auch kann vorgesehen sein, dass das zweite Steckerelement, zumindest relativ gesehen, ortsfest angeordnet ist und dem ersten Steckerelement mittels der Betätigungsvorrichtung eine Bewegung aufgeprägt werden kann. Von diesen Zuordnungen wird nachfolgend lediglich für die Zwecke dieser Beschreibung ausgegangen. In Kontext dieser Beschreibung umfasst der Begriff "beaufschlagen" sowohl eine Zustellbewegung und/oder auch ein Halten unter Vorspannung. Weiterhin kann "Kuppeln" ein mechanisches, ein optisches und/oder elektrisches Kuppeln bezeichnen. Ein optisches Kuppeln kann insbesondere über Lichtwellenleiter erfolgen.

In vorteilhafter Weise ist bei der erfindungsgemäßen Kupplungsvorrichtung das erste Steckerelement durch die kardanische Aufhängungsanordnung zumindest bezüglich einiger Freiheitsgrade von der übrigen Betätigungsvorrichtung entkoppelt. Hierdurch kann sich das erste Steckerelement während des Kuppelvorgangs selbstständig bezüglich des zweiten Steckerelements zentrieren, da die kardanische Aufhängungsanordnung den notwendigen Ausgleich bezüglich Winkel und Lage der beiden Steckerhälften zueinander ermöglicht. Ein Verspannen der beiden Steckerelemente wird hierdurch vermieden, so dass in der Folge eine Schwergängigkeit während des Kuppelvorgangs vermieden wird. Weiterhin ist von Vorteil, dass die kardanische Aufhängungsanordnung im Betrieb der Schleppantenne das erste Steckerelement bezüglich des zweiten Steckerelements nachführt, wenn infolge von Fahrzeugbewegungen Störeinflüsse auf die Steckerverbindung einwirken. Insbesondere die elektrischen oder optischen Kontakte werden durch diese Anordnung in einem sicheren Kontakt gehalten und zwar auch dann, wenn an der Schleppantenne starke Wechselbelastungen auftreten. Die kardanische Aufhängungsanordnung muss dabei keine Toleranz gegenüber allen Raumwinkeln aufweisen, sondern nur im Rahmen der durch die Steckerzuführung möglichen Winkelfehler variabel sein. In einer bevorzugten Ausführungsform beträgt die maximale Abweichung der Symmetrieachsen der Stecker zueinander 15°, besonders bevorzugt 10°, ganz besonders bevorzugt 5°.

Die Erfindung sieht vor, dass die Betätigungsvorrichtung eine Schlittenanordnung umfasst, wobei über die Schlittenanordnung das eine der beiden Steckerelemente gegenüber dem anderen Steckerelement zwischen einer ungekuppelten Stellung und einer gekuppelten Stellung bewegbar ist. Bevorzugt ist vorgesehen, dass die Schlittenanordnung die Kuppelbewegung über die kardanische Aufhängungsanordnung an das erste Steckerelement überträgt. In der gekuppelten Stellung dient die Schlittenanordnung dazu, das erste Steckerelement in Position zu halten.

Eine vorteilhafte Ausgestaltung der Erfindung sieht vor, dass ausgehend von der gekuppelten Stellung der Steckerelemente das eine der beiden Steckerelemente über die Schlittenanordnung mit einer Vorspannung beaufschlagbar ist, um eine definierte Andruckkraft zwischen den beiden Steckerelementen aufzubringen. Hiermit ist gewährleistet, dass Störeinflüsse infolge von Fahrzeugbewegungen nicht zu einem Lösen der Steckerverbindung beider Steckerelemente führen können beziehungsweise, dass es nicht zu einer Störung in der elektrischen und optischen Signalübertragung kommen kann. Insbesondere ergibt sich durch das Zusammenwirken der Schlittenanordnung mit der kardanischen Aufhängungsanordnung eine besonders sichere Steckerverbindung beider Steckerelemente, da die über die Schlittenanordnung aufgebrachte Vorspannkraft zu jeder Zeit ohne zu Verspannen auf das erste Steckerelement übertragen wird.

Die Erfindung sieht vor, dass die Schlittenanordnung ein erstes und ein zweites gegeneinander beweglich gehaltenes Schlittenelement aufweist. Indem zwei zueinander bewegliche Schlittenelemente vorgesehen sind, ist die Voraussetzung dafür geschaffen, dass die Schlittenanordnung an sich zumindest zwei Schaltzustände einnehmen kann. Ein Schaltzustand kann hier beispielsweise in einem gegeneinander eingefahrenen Zustand beider Schlittenelemente und ein zweiter Schaltzustand kann beispielsweise in einem gegeneinander ausgefahrenen Zustand beider Schlittenelemente bestehen. Bevorzugt ist vorgesehen, dass die Schlittenanordnung in dem eingefahrenen Zustand mittelbar oder unmittelbar durch geeignete Haltemittel arretierbar ist.

Eine vorteilhafte Ausgestaltung der Erfindung sieht vor, dass das erste Schlittenelement auf zumindest einer Führungsstange und das zweite Schlittenelement auf dem ersten Schlittenelement gleitend geführt sind. Hierdurch ergibt sich eine teleskopartige und platzsparende Anordnung der beiden Schlittenelemente zueinander. In einer bevorzugten Ausgestaltung sind zwei parallel angeordnete Führungsstangen vorgesehen, auf denen das erste Schlittenelement gleitend geführt ist.

Eine vorteilhafte Ausgestaltung der Erfindung sieht vor, dass das zweite Schlittenelement eine Schnittstelle zum Anschluss einer externen Betätigung aufweist. Hierdurch kann unmittelbar über die Schlittenanordnung eine Bewegung zum Kuppeln der Steckerelemente aufgeprägt werden.

Eine vorteilhafte Ausgestaltung der Erfindung sieht vor, dass Federmittel zwischen dem ersten Schlittenelement und dem zweiten Schlittenelement unter Vorspannung gehalten werden und die Federmittel beide Schlittenelemente in einen zueinander ausgefahrenen Zustand beaufschlagen. Hierdurch wird erreicht, dass die Schlittenanordnung als starres Übertragungselement fungiert solange die Betätigungskraft, mit der der Kuppelvorgang aktuiert wird, die durch die Federmittel aufgebrachte Vorspannkraft zuzüglich der Reibkraft zwischen den Steckerelementen nicht überschreitet. Bevorzugt ist dies der Fall, während das eine der beiden Steckerelemente gegenüber dem anderen Steckerelement von der ungekuppelten Stellung in die gekuppelten Stellung überführt wird. In der gekuppelten Stellung sind beide Steckerelemente in Anlage zueinander gekommen, so dass nun eine Betätigungskraft, die größer ist als die Vorspannkraft, in der Lage ist die beiden Schlittenelemente entgegen der Federmittel in einen eingefahrenen Zustand zu überführen.

Eine vorteilhafte Ausgestaltung der Erfindung sieht vor, dass die beiden Schlittenelemente in der ausgefahrenen Position durch Begrenzungsmittel entgegen der Vorspannung durch die Federmittel gehalten werden. Hierdurch ergibt sich in unbelasteter Stellung der Betätigungsmittel immer eine definierte Stellung der Schnittstelle zum Anschluss einer externen Betätigung.

Eine vorteilhafte Ausgestaltung der Erfindung sieht vor, dass die Begrenzungsmittel eine Distanzstange und zwei auf der Distanzstange angeordnete, federbeaufschlagte Schiebehülsen umfassen, wobei die Schiebehülsen die beiden Schlittenelemente in die ausgefahrene Position beaufschlagen. Hiermit kann auch über die Begrenzungsmittel eine Vorspannkraft aufgebracht werden.

Die Erfindung sieht vor, dass das eine der beiden Schlittenelemente der Schlittenanordnung als äußerer Haltering der kardanischen Aufhängungsanordnung ausgebildet ist. Hierdurch wird eine bauliche Integration der Schlittenanordnung und der kardanischen Aufhängungsanordnung erreicht.

Eine vorteilhafte Ausgestaltung der Erfindung sieht vor, dass das als äußerer Haltering der kardanischen Aufhängungsanordnung ausgebildete Schlittenelement gabelförmig gestaltet ist. Hierdurch ergibt sich ein Gewichtsersparnis und Vorteile bei der Montage der Betätigungsanordnung. Die Aufgabe wird ferner gelöst durch die Verwendung einer erfindungsgemäßen Kupplungsvorrichtung für eine lösbare Steckerverbindung zwischen einer Schleppantenne und einem Wasserfahrzeug, insbesondere einem Unterseeboot.

Die Erfindung wird nachfolgend mit weiteren Merkmalen, Einzelheiten und Vorteilen anhand der beigefügten Figuren erläutert. Die Figuren illustrieren dabei lediglich eine beispielhafte Ausführungsform der Erfindung. Hierin zeigen
- Figur 1: eine erfindungsgemäße Kupplungsvorrichtung in einer ungekuppelten Stellung;
- Figur 2: eine erfindungsgemäße Kupplungsvorrichtung in einer gekuppelten Stellung;
- Figur 3: eine erste Schnittdarstellung der erfindungsgemäßen Kupplungsvorrichtung;
- Figur 4: eine zweite Schnittdarstellung der erfindungsgemäßen Kupplungsvorrichtung;
- Figur 5: eine detaillierte Darstellung einer kardanischen Aufhängungsanordnung der erfindungsgemäßen Kupplungsvorrichtung und
- Figur 6: eine detaillierte Darstellung einer kardanischen Aufhängungsanordnung der erfindungsgemäßen Kupplungsvorrichtung.

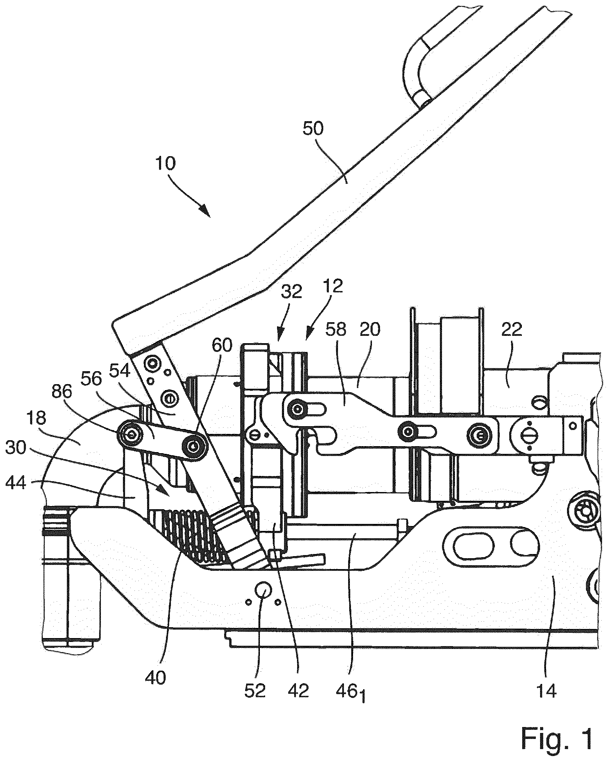

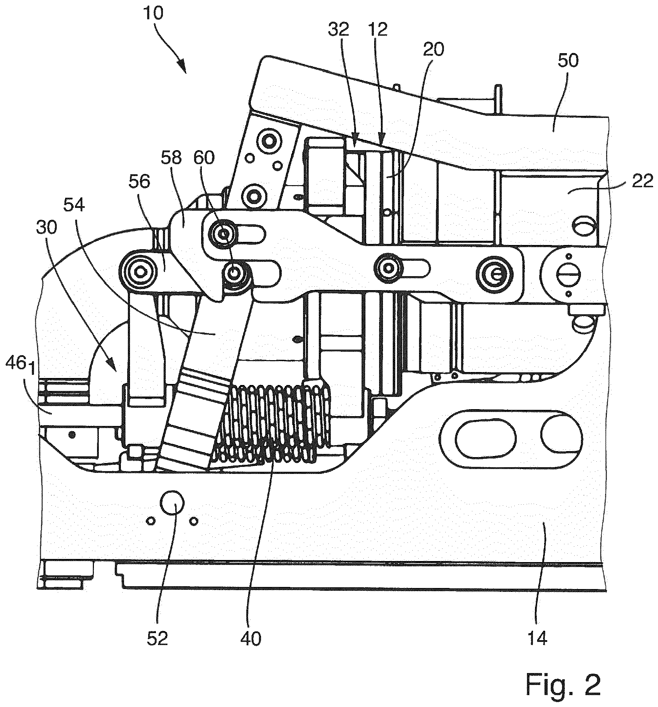

Die Figur 1 zeigt eine lösbare Steckerverbindung 12 zwischen einer nicht dargestellten Schleppantenne und einem nicht dargestellten Wasserfahrzeug und eine Kupplungsvorrichtung 10 für die Steckerverbindung 12. Bei dem Wasserfahrzeug kann es sich um ein Unterseeboot handeln. Die Kupplungsvorrichtung 10 weist zunächst ein Rahmenelement 14 auf. Das Rahmenelement 14 ist in nicht näher dargestellter Weise am Wasserfahrzeug beziehungsweise im Bereich des Außenschiffs des Unterseeboots befestigt. An dem Rahmenelement 14 ist zumindest mittelbar die Steckerverbindung 12, welche ein erstes Steckerelement 20 und ein zweites Steckerelement 22 aufweist, gehalten. Hierbei ist das erste Steckerelement 20 über eine Betätigungsvorrichtung 30 beweglich an dem Rahmenelement 14 und das zweite Steckerelement 22 über nicht näher dargestellte Befestigungsmittel lösbar an dem Rahmenelement 14 fixiert. Auf der linken Seite werden die elektrischen Leitungen in einem gebogenen Rohr 18 zu den Signalverarbeitungseinrichtungen auf dem Wasserfahrzeug geleitet. Die Kupplungsvorrichtung 10 und die beiden Steckerelemente 20, 22 sind in einer ungekuppelten Stellung zueinander dargestellt. Ferner ist eine Betätigung 50 in Form eines Hebels vorgesehen, die an ihrem einen Ende an dem Rahmenelement 14 angelenkt ist und über die in einem Abstand eines Hebelarmes 54 zu der Anlenkung 52 über eine Zugstrebe 56 eine Zugkraft auf die Betätigungsvorrichtung 30 übertragen werden kann. Auch sind Haltemittel 58 vorgesehen, die in einer gekuppelten und vorgespannten Stellung der Kupplungsvorrichtung 10 und der beiden Steckerelemente 20, 22 zueinander einen Rastbolzen 60 hintergreifen, um hierüber eine Arretierung dieser Stellung vorzunehmen, wie in Figur 2 dargestellt.

Die Betätigungsvorrichtung 30 ist vorliegend in einer möglichen Ausführungsform umfassend eine kardanische Aufhängungsanordnung 32 und eine Schlittenanordnung 40 dargestellt. Denkbar wäre auch, dass die Betätigungsvorrichtung 30 lediglich eine dieser Anordnungen, nämlich entweder eine kardanische Aufhängungsanordnung 32 oder eine Schlittenanordnung 40, umfasst.

Die Figur 2 zeigt die Kupplungsvorrichtung 10 und die beiden Steckerelemente 20, 22 in einer gekuppelten und vorgespannten Stellung zueinander, wie im weiteren Verlauf der Beschreibung noch näher erläutert wird. Zu erkennen ist, dass das erste Steckerelement 20 vollständig in das zweite Steckerelement 22 eingekuppelt ist. Somit hintergreift der Rastbolzen 60 die Haltemittel 58, so dass die Kupplungsvorrichtung 10 in dieser Stellung arretiert ist.

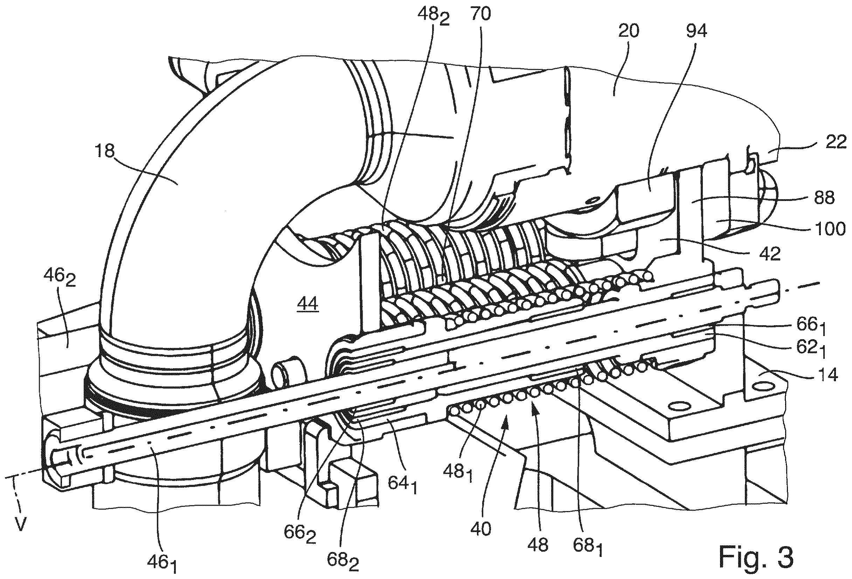

Die Figur 3 zeigt in einer teilweise geschnittenen Darstellung die Schlittenanordnung 40 der Betätigungsvorrichtung 30 in der gekuppelten und vorgespannten Stellung der beiden Steckerelemente 20, 22 zueinander. Die Schlittenanordnung 40 umfasst zunächst zwei gegeneinander verschiebbar gehaltene Schlittenelemente 42, 44, wobei das erste Schlittenelement 42 innerhalb des zweiten Schlittenelements 44 gleitend geführt ist. Über das erste Schlittenelement 42 sind beide Schlittenelemente 42, 44 auf zwei parallel verlaufenden Führungsstangen 46₁, 46₂ gleitend geführt. Die Führungsstangen 46₁, 46₂ sind an dem Rahmenelement 14 gehalten. Für die gleitende Lagerung des ersten Schlittenelements 42 auf den Führungsstangen 46₁, 46₂ und des zweiten Schlittenelements 44 auf dem ersten Schlittenelement 42 bilden die Schlittenelemente 42, 44 jeweils zwei parallel angeordnete Gleithülsen 62₁, 62₂, 64₁, 64₂ aus. Bevorzugt ist vorgesehen, dass in den jeweiligen Endbereichen der Gleithülsen 62₁, 62₂, 64₁, 64₂ Gleitlagerbuchsen 66₁, 66₂, 68₁, 68₂ eingesetzt sind. Weiterhin ist vorgesehen, dass zwischen dem ersten Schlittenelement 42 und dem zweiten Schlittenelement 44 Federmittel 48 radial außerhalb der Gleithülsen 62₁, 62₂, 64₁, 64₂ angeordnet sind. Die Federmittel 48 können als Schraubenfedern 48₁, 48₂ ausgeführt sein. Die Beaufschlagungsrichtung der Federmittel 48 verläuft entlang der durch die Gleithülsen 62₁, 62₂, 64₁, 64₂ vorgegebene Verschieberichtung V. Die Federmittel 48 sind zwischen den beiden Schlittenelementen 42, 44 unter Vorspannung gehalten, so dass die Federmittel 48 die beiden Schlittenelemente 42, 44 auseinander in eine ausgefahrene Position beaufschlagen. Bei dieser ausgefahrenen Position handelt es sich um eine Endposition, in der die Federmittel 48 weiterhin vorgespannt sind und ein weiteres Auseinanderbewegen der beiden Schlittenelemente 42, 44 zueinander durch Begrenzungsmittel 70 unterbunden ist.

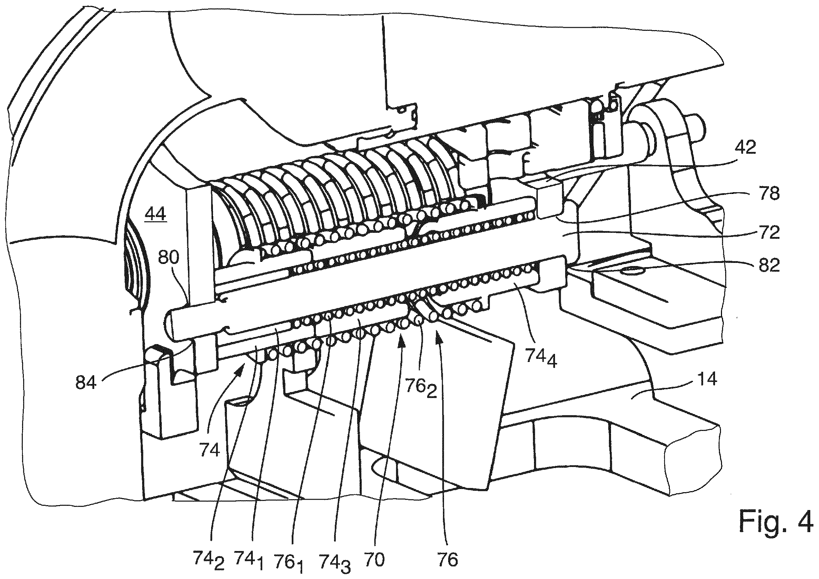

Die Figur 4 zeigt den Aufbau der Begrenzungsmittel 70. Die Begrenzungsmittel 70 umfassen zunächst eine Distanzstange 72, die mit ihren beiden Endbereichen in jeweiligen Bohrungen 78, 80 der Schlittenelemente 42, 44 ebenfalls gleitend gehalten sind. Damit die Begrenzungsmittel 70 die beiden Schlittenelemente 42, 44 in der ausgefahrenen Endposition halten können, bildet die Distanzstange 72 zur einen Seite einen Schulterabschnitt 82 aus, der an einer Stirnfläche des ersten Schlittenelements 42 anliegt. An der anderen Seite der Distanzstange 72 ist eine Mutter 84 gehalten, der an einer Stirnfläche des zweiten Schlittenelements 44 anliegt. Innerhalb der beiden Schlittenelemente 42, 44 ist auf der Distanzstange 72 eine Anordnung bestehend aus Federmitteln 76 und mehreren Schiebehülsen 74 koaxial gehalten. Unmittelbar auf der Distanzstange 72 sind eine erste Schraubenfeder 76₁ und eine erste Schiebehülse 74₁ gehalten. Die erste Schraubenfeder 76₁ und die erste Schiebehülse 74₁ sind derart aufeinander abgestimmt, dass die ersten Schraubenfeder 76₁ auch in der ausgefahrenen Endposition der beiden Schlittenelemente 42, 44 unter Vorspannung gehalten wird. Wiederum auf der ersten Schraubenfeder 76₁ und der ersten Schiebehülse 74₁ sind drei Schiebehülsen 74₂, 74₃, 74₄ und auf diesen eine zweite Schraubenfeder 76₂ gehalten. Während die Schraubenfeder 76₂ zwischen den äußeren Schiebehülsen 74₂, 74₄ auch in der ausgefahrenen Endposition unter Vorspannung gehalten ist, ist die Schiebehülse 74₃ zwischen den äußeren Schiebehülsen 74₂, 74₄ gehalten, um eine Ein- bzw. Wegknicken der Schraubenfeder 76₂ zu verhindern.

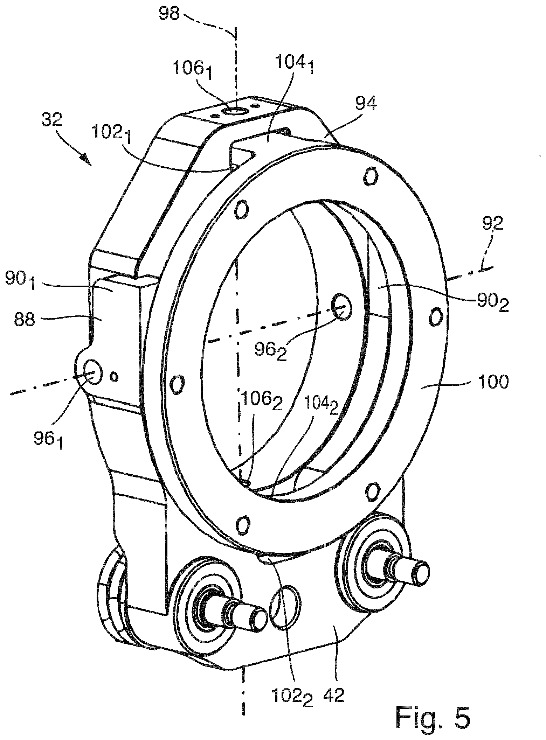

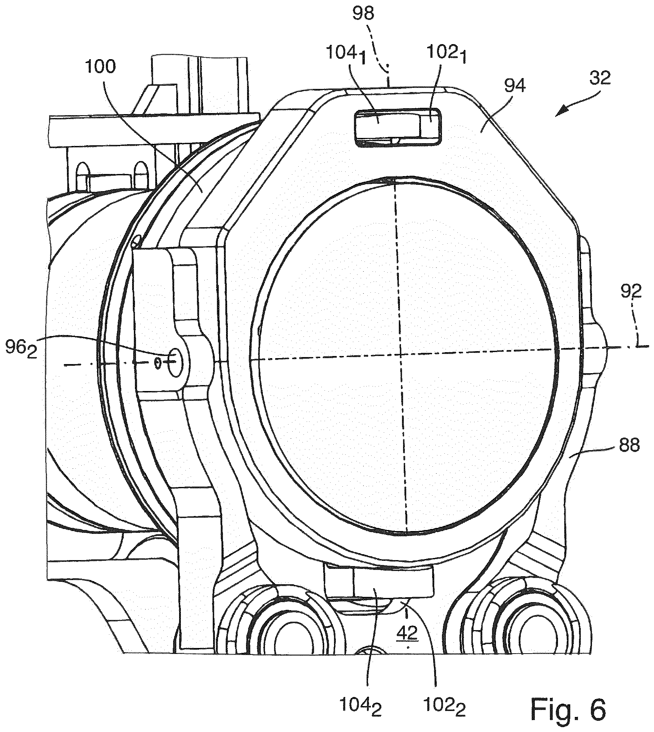

Die Figuren 5 und 6 zeigen die kardanische Aufhängungsanordnung 32 in detaillierter Darstellung. Die Figur 5 zeigt die kardanischen Aufhängungsanordnung 32 aus der Richtung des zweiten Steckerelements 22, wobei keines der Steckerelemente 20, 22 dargestellt ist. Zu erkennen ist von unten nach oben aufragend das erste Schlittenelement 42, das nach oben hin gabelformig ausgebildet ist und hierüber eine Haltegabel 88 ausbildet. An der Haltegabel 88 ist beidseitig an den Gabelenden 90₁, 90₂ um eine überwiegend horizontal ausgerichtete erste Achse 92 ein erster Kardanring 94 schwenkbar gehalten. Für den Zweck der Halterung des ersten Kardanrings 94 an der Haltegabel 88 können Lagerbolzen 96₁, 96₂ vorgesehen sein. An dem ersten Kardanring 94 ist um eine rechtwinklig zu der ersten Achse 92 angeordnete zweite Achse 98 ein zweiter Kardanring 100 schwenkbar gehalten. Hierfür bildet der erste Kardanring 94 im Bereich der zweiten Achse 98 Aufnahmetaschen 102₁, 102₂ aus, in die jeweilige Lagerarme 104₁, 104₂ des zweiten Kardanrings 100 eingreifen und über Lagerbolzen 106₁, 106₂ gelagert sind. An dem zweiten Kardanring 100 ist das zweite Steckerelement 22 gehalten. Aus der Figur 6 ist nun insbesondere zu erkennen, dass die Lagerarme 104₁, 104₂ des zweiten Kardanrings 100 mit einem Spiel entlang der zweiten Achse 98 in der jeweiligen Aufnahmetasche 102₁, 102₂ des ersten Kardanrings 94 gelagert sind. Weiterhin ist ein Spiel zwischen Gabelenden 90 und Kardanring 94 entlang der Achse 92 vorhanden, wodurch ein waagerechter Lageausgleich möglich ist. Die kardanische Aufhängungsanordnung 32 ermöglicht somit über die Schwenkbarkeit um die Achsen 92, 98 und die Bewegungsfreiheit des zweiten Kardanrings 100 gegenüber dem ersten Kardanring 94 infolge des Spiels der Lagerarme 104₁, 104₂ in den Aufnahmetaschen 102₁, 102₂ einen Winkelausgleich und einen vertikalen und waagerechten Lageausgleich des ersten Steckerelements 20 während des Kuppelvorgangs der beiden Steckerelemente 20, 22. Durch diese Möglichkeit des Winkel- und Lageausgleichs können Bauteilbewegungen und Verformungen durch äußere Einflüsse an den Steckerelementen 20 und 22 ausgeglichen werden. Weiterhin wird über eine Kette von Bauteilen sich summierende Toleranzen ausgeglichen bzw. unschädlich gemacht. Auch können folglich die Anforderungen an die Toleranz einzelner Bauteile reduziert werden.

Der Funktionsablauf des Kuppelvorgangs der Steckerverbindung 12 mit der Kupplungsvorrichtung 10 kann folgendermaßen beschrieben werden:
Zunächst haben die Kupplungsvorrichtung 10 und die beiden Steckerelemente 20, 22 den in der Figur 1 gezeigten Ausgangszustand. In dem sind die Steckerelemente 20, 22 noch ungekuppelt zueinander, die Betätigungsanordnung 30 befindet sich in einer Stellung, in der die Schlittenelemente 42, 44 vollständig zur einen Seite, vorliegend in Figur 1 zur linken Seite, auf den Führungsstangen 46₁, 46₂ verschoben ist. Zum Einleiten des Kuppelvorgangs wird über den Hebel 50 eine Stellkraft auf die Betätigungsvorrichtung 30 gebracht. Hierzu wird über die Schnittstelle 86 die Stellkraft auf das zweite Schlittenelement 44 übertragen. Das zweite Schlittenelement 44 überträgt die Stellkraft über die als Schraubenfedern ausgebildeten Federmittel 48, 76 auf das erste Schlittenelement 42. Das erste Schlittenelement 42 überträgt die Stellkraft über die kardanische Aufhängungsanordnung 32 an das erste Steckerelement 20, welches sich zur Herstellung der Steckerverbindung 12 in das zweite Steckerelement 22 einschiebt. Somit bewirkt die Stellkraft eine Schiebebewegung der Schlittenanordnung 40, der kardanischen Aufhängungsanordnung 32 und des ersten Steckerelements 20, welche in der Figur 1 nach rechts gerichtet ist. Entscheidend ist hierbei, dass sich das ersten Schlittenelement 42 und das zweite Schlittenelement 44 nicht gegeneinander, d.h. gegen die Vorspannung durch die Federmittel 48, 76, bewegen, solange die beiden Steckerelemente 20, 22 noch nicht vollständig ineinander geschoben bzw. gekuppelt sind. Bis zum vollständig gekuppelten Zustand der beiden Steckerelemente 20, 22 müssen Reibkräfte und die Steckerkräfte beim Steckvorgang überwunden werden. Sobald die beiden Steckerelemente 20, 22 vollständig miteinander gekuppelt sind und über den Hebel 50 weiterhin eine Stellkraft auf das zweite Schlittenelement 44 übertragen wird, übt das zweite Steckerelement 22 eine Haltekraft auf das erste Steckerelement 20aus. Diese Haltekraft wird über die kardanische Aufhängungsanordnung 32 auf das erste Schlittenelement 42 übertragen, so dass dieses keine weitere Bewegung in die oben beschriebene Richtung ausführen kann. Ab dieser Stellung führt die Stellkraft dazu, dass sich das zweite Schlittenelement 44 entgegen der Federkraft der Federmittel 48, 76 auf das erste Schlittenelement 42 zubewegt, die Federmittel 48, 76 weiter folglich komprimiert werden. Folglich sind nun die Federmittel 48, 76 zwischen dem zweiten Schlittenelement 44 und dem zweiten Steckerelement 22 abschließend vorgespannt, so dass die Vorspannkraft der Federmittel 48, 76 das erste Steckerelement 20 gegen das zweite Steckerelement 22 beaufschlagt. Diesen Zustand zeigt die Figur 2. Hierdurch erfährt die Steckerverbindung 12 auch bei den üblichen Fahrzeugbewegungen eines als Unterseeboot gestalteten Wasserfahrzeugs eine definierte Andruckkraft, die für einen sicheren Kontakt erforderlich ist.

### Bezugszeichenliste

- 10: Kupplungsvorrichtung
- 12: Steckerverbindung
- 14: Rahmenelement
- 18: Rohr
- 20: Steckerelement
- 22: Steckerelement
- 30: Betätigungsvorrichtung
- 32: kardanische Aufhängungsanordnung
- 40: Schlittenanordnung
- 42: Schlittenelement
- 44: Schlittenelement
- 46: Führungsstange
- 48: Federmittel
- 50: Betätigung
- 52: Anlenkung
- 54: Hebelarm
- 56: Zugstrebe
- 58: Haltemittel
- 60: Rastbolzen
- 62: Gleithülse
- 64: Gleithülse
- 66: Gleitlagerbuchse
- 68: Gleitlagerbuchse
- 70: Begrenzungsmittel
- 72: Distanzstange
- 74: Schiebehülsen
- 76: Federmittel
- 78: Bohrung
- 80: Bohrung
- 82: Schulterabschnitt
- 84: Mutter
- 86: Schnittstelle
- 88: Haltegabel
- 90: Gabelende
- 92: Achse
- 94: Kardanring
- 96: Lagerbolzen
- 98: Achse
- 100: Kardanring
- 102: Aufnahmetasche
- 104: Lagerarm
- 106: Lagerbolzen

## Patentansprüche

1. Kupplungsvorrichtung (10) für eine lösbare Steckerverbindung (12) zwischen einer Schleppantenne und einem Wasserfahrzeug, umfassend
ein erstes Steckerelement (20) und ein zweites Steckerelement (22) zum Kuppeln von Schleppantenne und Wasserfahrzeug,
eine Betätigungsvorrichtung (30), um das eine Steckerelement der ersten und zweiten Steckerelemente (20, 22) in Richtung des jeweils anderen Steckerelements (22, 20) zu beaufschlagen und beide Steckerelemente (20, 22) miteinander kraftschlüssig zu kuppeln, wobei die Betätigungsvorrichtung (30) eine kardanische Aufhängungsanordnung (32) aufweist, über die das eine des ersten und zweiten Steckerelements (20, 22) beweglich gehalten ist,
wobei die Betätigungsvorrichtung (30) eine Schlittenanordnung (40) umfasst, wobei die Schlittenanordnung (40) ein erstes und ein zweites gegeneinander beweglich gehaltenes Schlittenelement (42, 44) aufweist und auf zumindest einem der Schlittenelemente (42, 44) zumindest eines der Steckerelemente (20, 22) angeordnet ist und über die Schlittenanordnung (40) das eine der beiden Steckerelemente (20, 22) gegenüber dem anderen Steckerelement (22, 20) zwischen einer ungekuppelten Stellung und einer gekuppelten Stellung bewegbar ist,
**dadurch gekennzeichnet, dass** das eine der beiden Schlittenelemente (42, 44) der Schlittenanordnung (40) als äußerer Haltering der kardanischen Aufhängungsanordnung (32) ausgebildet ist.

2. Kupplungsvorrichtung (10) nach Anspruch 1, **dadurch gekennzeichnet, dass** ausgehend von der gekuppelten Stellung das eine der beiden Steckerelemente (20, 22) über die Schlittenanordnung (40) mit einer Vorspannung beaufschlagbar ist, um eine definierte Andruckkraft zwischen den beiden Steckerelementen (20, 22) aufzubringen.

3. Kupplungsvorrichtung (10) nach Anspruch 1 oder 2, **dadurch gekennzeichnet, dass** das erste Schlittenelement (42) auf zumindest einer Führungsstange (46) und das zweite Schlittenelement (44) auf dem ersten Schlittenelement (42) gleitend geführt sind.

4. Kupplungsvorrichtung (10) nach Anspruch 3, **dadurch gekennzeichnet, dass** das zweite Schlittenelement (44) eine Schnittstelle (86) zum Anschluss einer externen Betätigung (50) aufweist.

5. Kupplungsvorrichtung (10) nach Anspruch 3 oder 4, **dadurch gekennzeichnet, dass** Federmittel (48) zwischen dem ersten Schlittenelement (42) und dem zweiten Schlittenelement (44) unter Vorspannung gehalten werden und die Federmittel (48) beide Schlittenelemente (42, 44) in einen zueinander ausgefahrenen Zustand beaufschlagen.

6. Kupplungsvorrichtung (10) nach Anspruch 5, **dadurch gekennzeichnet, dass** die beiden Schlittenelemente (42, 44) in dem ausgefahrenen Zustand durch Begrenzungsmittel (70) entgegen der Vorspannung durch die Federmittel (48) gehalten werden.

7. Kupplungsvorrichtung (10) nach Anspruch 6, **dadurch gekennzeichnet, dass** die Begrenzungsmittel (70) eine Distanzstange (72) und zwei auf der Distanzstange (72) angeordnete, federbeaufschlagte Schiebehülsen (74₁, 74₂) umfassen, wobei die Schiebehülsen (74₁, 74₂) die beiden Schlittenelemente (42, 44) in die ausgefahrene Position beaufschlagen.

8. Kupplungsvorrichtung (10) nach einem der Ansprüche 1 bis 7, **dadurch gekennzeichnet, dass** das als äußerer Haltering der kardanischen Aufhängungsanordnung (32) ausgebildete Schlittenelement (42, 44) gabelförmig gestaltet ist.

9. Verwendung einer Kupplungsvorrichtung (10) nach einem der Ansprüche 1 bis 8 für eine lösbare Steckerverbindung (12) zwischen einer Schleppantenne und einem Wasserfahrzeug, insbesondere einem Unterseeboot.

## Claims

1. Coupling device (10) for a releasable plug-in connection (12) between a trailing aerial and a watercraft, comprising
a first plug-in element (20) and a second plug-in element (22) for coupling trailing aerial and watercraft,
an actuating device (30) for acting upon one plug-in element of the first and second plug-in elements (20, 22) in the direction of the other plug-in element (22, 20) in each case and coupling both plug-in elements (20, 22) with one another in a force-fitting manner, wherein the actuating device (30) has a Cardan suspension arrangement (32) via which one of the first and second plug-in elements (20, 22) is held movably,
wherein the actuating device (30) comprises a carriage arrangement (40), wherein the carriage arrangement (40) has a first and a second carriage element (42, 44) held movably in relation to one another and at least one of the plug-in elements (20, 22) is arranged on at least one of the carriage elements (42, 44) and via the carriage arrangement (40) one of the two plug-in elements (20, 22) is movable in respect of the other plug-in element (22, 20) between an uncoupled position and a coupled position, **characterized in that** one of the two carriage elements (42, 44) of the carriage arrangement (40) is configured as an outer holding ring of the Cardan suspension arrangement (32).

2. Coupling device (10) according to Claim 1, **characterized in that** starting from the coupled position, one of the two plug-in elements (20, 22) can be acted upon with a pretension via the carriage arrangement (40), in order to apply a defined contact force between the two plug-in elements (20, 22).

3. Coupling device (10) according to Claim 1 or 2, **characterized in that** the first carriage element (42) is guided in a sliding manner on at least one guide rod (46) and the second carriage element (44) on the first carriage element (42).

4. Coupling device (10) according to Claim 3, **characterized in that** the second carriage element (44) has an interface (86) for connection of an external actuation (50).

5. Coupling device (10) according to Claim 3 or 4, **characterized in that** spring means (48) between the first carriage element (42) and the second carriage element (44) are held under pretension and the spring means (48) act upon both carriage elements (42, 44) in an extended state relative to one another.

6. Coupling device (10) according to Claim 5, **characterized in that** the two carriage elements (42, 44) are held in the extended state by limiting means (70) against the pretensioning by the spring means (48).

7. Coupling device (10) according to Claim 6, **characterized in that** the limiting means (70) comprise a spacer rod (72) and two spring-loaded sliding sleeves (74₁, 74₂) arranged on the spacer rod (72), wherein the sliding sleeves (74₁, 74₂) act upon the two carriage elements (42, 44) in the extended position.

8. Coupling device (10) according to one of Claims 1 to 7, **characterized in that** the carriage element (42, 44) configured as the outer holding ring of the Cardan suspension arrangement (32) has a fork-like design.

9. Use of a coupling device (10) according to one of Claims 1 to 8 for a releasable plug-in connection (12) between a trailing aerial and a watercraft, in particular a submarine.

## Revendications

1. Dispositif d'accouplement (10) destiné une liaison de connecteur amovible (12) entre une antenne remorquée et un engin nautique, le dispositif d'accouplement comprenant
un premier élément de connecteur (20) et un deuxième élément de connecteur (22) destinés à accoupler l'antenne remorquée et l'engin nautique,
un dispositif d'actionnement (30) destiné à pousser un élément de connecteur des premier et deuxième éléments de connecteur (20, 22) en direction de l'autre élément de connecteur (22, 20) et à accoupler en force les deux éléments de connecteur (20, 22) l'un avec l'autre, le dispositif d'actionnement (30) comportant un ensemble de suspension à Cardan (32) permettant de maintenir l'un des premier et deuxième éléments de connecteur (20, 22) de manière mobile,
le dispositif d'actionnement (30) comprenant un ensemble formant glissière (40), l'ensemble formant glissière (40) comportant un premier et un deuxième élément de glissière (42, 44) qui sont maintenus de manière mobile l'un par rapport à l'autre et l'un au moins des éléments de connecteur (20, 22) étant disposé sur l'un au moins des éléments de glissière (42, 44) et l'un des deux éléments de connecteur (20, 22) pouvant être déplacé par rapport à l'autre élément de connecteur (22, 20) entre une position désaccouplée et une position accouplée par le biais de l'ensemble formant glissière (40),
**caractérisé en ce que** l'un des deux éléments de glissière (42, 44) de l'ensemble formant glissière (40) est conçu comme une bague de retenue extérieure de l'ensemble de suspension à Cardan (32).

2. Dispositif d'accouplement (10) selon la revendication 1, **caractérisé en ce que**, à partir de la position accouplée, l'un des deux éléments de connecteur (20, 22) peut être poussé sous précontrainte par l'ensemble formant glissière (40) afin d'appliquer une force de pression définie entre les deux éléments de connecteur (20, 22).

3. Dispositif d'accouplement (10) selon la revendication 1 ou 2, **caractérisé en ce que** le premier élément de glissière (42) est guidé de manière coulissante sur au moins une barre de guidage (46) et le deuxième élément de glissière (44) est guidé de manière coulissante sur le premier élément de glissière (42) .

4. Dispositif d'accouplement (10) selon la revendication 3, **caractérisé en ce que** le deuxième élément de glissière (44) comporte une interface (86) destinée au raccordement d'un actionneur extérieur (50) .

5. Dispositif d'accouplement (10) selon la revendication 3 ou 4, **caractérisé en ce que** des moyens à ressort (48) sont maintenus sous précontrainte entre le premier élément de glissière (42) et le deuxième élément de glissière (44) et les moyens à ressort (48) poussent les deux éléments de glissière (42, 44) dans un état déployé l'un par rapport à l'autre.

6. Dispositif d'accouplement (10) selon la revendication 5, **caractérisé en ce que** les deux éléments de glissière (42, 44) sont maintenus à l'état déployé par des moyens de limitation (70) s'opposant à la précontrainte exercée par les moyens à ressort (48).

7. Dispositif d'accouplement (10) selon la revendication 6, **caractérisé en ce que** les moyens de limitation (70) comprennent une barre d'écartement (72) et deux manchons coulissants à ressort (74₁, 74₂) disposés sur la barre d'écartement (72), les manchons coulissants (74₁, 74₂) poussant les deux éléments de glissière (42, 44) jusque dans la position déployée.

8. Dispositif d'accouplement (10) selon l'une des revendications 1 à 7, **caractérisé en ce que** l'élément de glissière (42, 44) réalisé sous la forme d'une bague de retenue extérieure de l'ensemble de suspension à Cardan (32) est en forme de fourche.

9. Utilisation d'un dispositif d'accouplement (10) selon l'une des revendications 1 à 8 pour établir une liaison de connecteur amovible (12) entre une antenne remorquée et un engin nautique, en particulier un sous-marin.
